(19) Europäisches Patentamt
European Patent Office
Office européen des brevets

(11) **EP 1 329 659 B1**

(12) **FASCICULE DE BREVET EUROPEEN**

(45) Date de publication et mention
de la délivrance du brevet:
**21.02.2007 Bulletin 2007/08**

(51) Int Cl.:
***F16K 31/06*** *(2006.01)* ***F16K 37/00*** *(2006.01)*

(21) Numéro de dépôt: **02293128.1**

(22) Date de dépôt: **17.12.2002**

(54) **Procédé de tarage du ressort mobile d'une électrovanne**

Verfahren zur Kalibrierung der beweglichen Feder von Magnetventilen

Method of calibrating a mobile spring of an electrovalve

(84) Etats contractants désignés:
**AT BE BG CH CY CZ DE DK EE ES FI FR GB GR IE IT LI LU MC NL PT SE SI SK TR**

(30) Priorité: **16.01.2002 FR 0200505**

(43) Date de publication de la demande:
**23.07.2003 Bulletin 2003/30**

(73) Titulaire: **Asco Joucomatic**
**92500 Rueil Malmaison (FR)**

(72) Inventeurs:
• **Solet, Daniel**
**28170 Saint Sauveur Levasville (FR)**
• **Courpron, Bernard**
**28210 Nogent le Roi (FR)**
• **Vandamme, Richard**
**28300 Mainvilliers (FR)**

(74) Mandataire: **Peaucelle, Chantal et al**
**Cabinet Armengaud Aîné**
**3, Avenue Bugeaud**
**75116 Paris (FR)**

(56) Documents cités:
**DE-U- 9 319 668** **US-A- 3 952 774**
**US-A- 3 965 923**

• **PATENT ABSTRACTS OF JAPAN vol. 006, no. 096 (P-120), 4 juin 1982 (1982-06-04) & JP 57 029914 A (NARA SHIGETOSHI), 18 février 1982 (1982-02-18)**

**Description**

La présente invention concerne d'une façon générale des perfectionnements apportés aux électrovannes. Elle se réfère plus particulièrement aux électrovannes comportant un sous-ensemble électro-aimant associé à un sous-ensemble de commutation pneumatique à clapet, le sous-ensemble de commutation pneumatique étant constitué d'un corps enfermant le clapet qui est emprisonné entre deux sièges d'étanchéité disposés en vis-à-vis. Le mouvement du clapet est provoqué d'une part par un ressort, qui est situé dans le noyau mobile du sous-ensemble électro-aimant, par l'intermédiaire d'un poussoir et, d'autre part par un ressort situé sous le clapet (généralement dénommé ressort sous clapet) et en appui autour du siège inférieur du sous-ensemble de commutation pneumatique, ce ressort sous clapet venant plaquer ledit clapet sur le siège supérieur du sous-ensemble de commutation pneumatique lorsque l'électro-aimant est alimenté. En position repos, c'est-à-dire lorsque l'électro-aimant n'est pas alimenté, le ressort du noyau mobile du sous-ensemble électro-aimant repousse le noyau en contact sur le poussoir et plaque le clapet sur le siège de la voie inférieure de l'électrovanne.

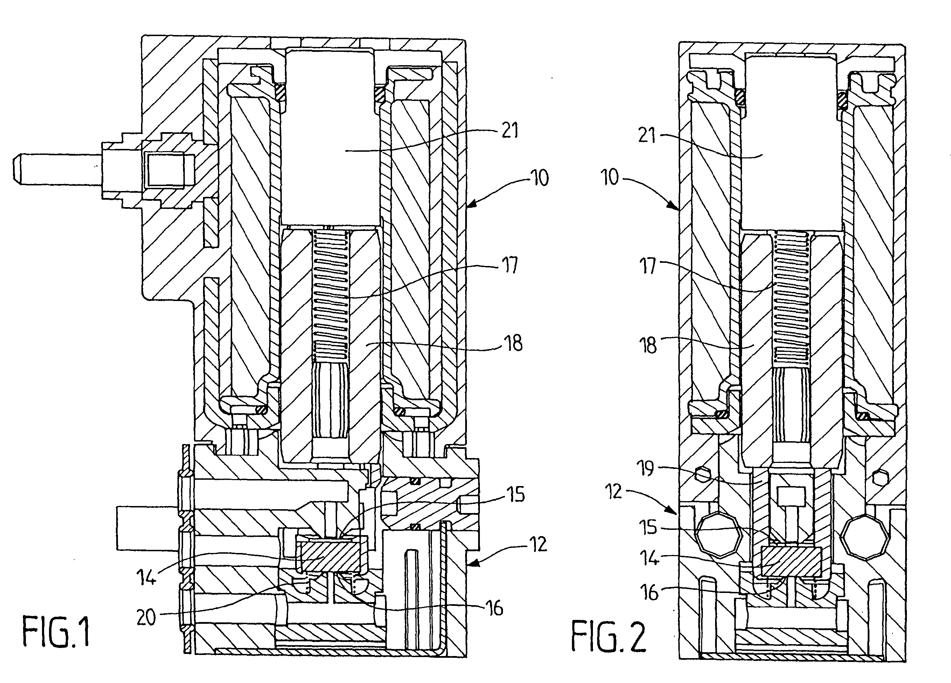

Afin de mieux faire comprendre les perfectionnements apportés par l'invention, on se réfère tout d'abord aux figures 1 et 2 qui représentent en coupes axiales et verticales un électro-aimant selon l'état antérieur de la technique.

En se référant à ces figures 1 et 2, on voit que la présente invention se réfère à une électrovanne comportant, d'une part un sous-ensemble électro-aimant désigné dans son ensemble par la référence 10 et, d'autre part un sous-ensemble de commutation pneumatique désigné dans son ensemble par la référence 12. Des moyens mécaniques assurent l'assemblage des deux sous-ensembles 10 et 12.

Le sous-ensemble de commutation pneumatique 12 est constitué d'un corps enfermant un clapet 14, réalisé de préférence en élastomère, qui est emprisonné entre deux sièges d'étanchéité 15, 16, en vis-à-vis. Le mouvement du clapet 14 dans le corps du sous-ensemble de commutation pneumatique 12 est provoqué, d'une part par un ressort 17 positionné dans le noyau mobile 18 du sous-ensemble électro-aimant 10, par l'intermédiaire d'un poussoir 19 et, d'autre part par un ressort 20 (ressort sous clapet) assurant le rappel du clapet.

En position repos, c'est-à-dire lorsque l'électro-aimant n'est pas alimenté, le ressort 17 repousse le noyau mobile 18 de manière que celui-ci vienne plaquer le clapet 14, par l'intermédiaire de son poussoir 19, sur le siège 16 de la voie inférieure de l'électrovanne.

L'effort du ressort 17 du noyau mobile 18 doit être suffisant pour garantir l'étanchéité du siège inférieur 16 et pour obtenir ce résultat, cet effort doit être égal à la somme suivante :

$$\text{(pression} \times \text{section du siège 16)} + \text{effort du ressort 20} + \text{effort}$$

d'étanchéité supplémentaire.

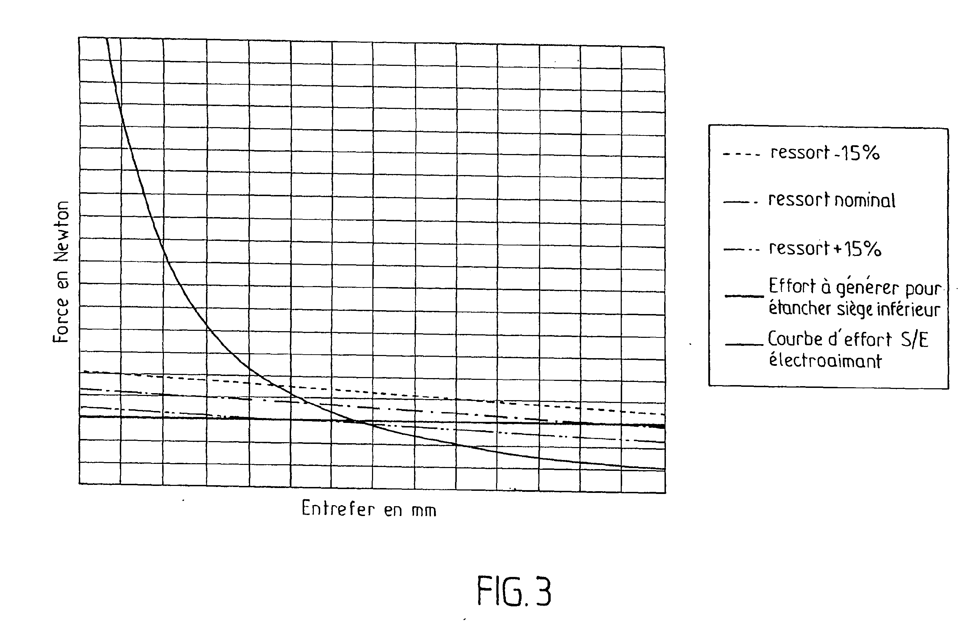

On peut à cet égard se référer à la figure 3 sur laquelle on a représenté la force du ressort 17 en fonction de l'entrefer du siège inférieur 16 du clapet.

En position électrovanne ouverte, c'est-à-dire lorsque l'électro-aimant est alimenté, l'effort magnétique qu'il génère dans le noyau mobile 18 est plus important que l'effort du ressort 17 et dans ces conditions, le noyau mobile 18 vient se coller sur le noyau fixe 21 (ou culasse) du sous-ensemble électro-aimant 10 et il n'exerce plus d'effort sur le clapet 14 par l'intermédiaire du poussoir 19. Le ressort 20 de rappel du clapet 14 plaque alors ce dernier sur le siège supérieur 15 du sous-ensemble 12.

Compte tenu de son mode de fabrication (notamment qualité d'acier, diamètre du fil, nombre et pas des spires, longueur libre), le ressort 17 du noyau mobile ne peut être obtenu qu'avec une certaine tolérance de longueur libre donc d'effort à une certaine hauteur prédéterminée, appelée « hauteur posée ». Dans les solutions actuellement mises en oeuvre, sur une charge à hauteur posée, l'effort peut varier de 20 à 40%, ce qui est de moins en moins acceptable dans la recherche actuelle des performances et de miniaturisation des électrovannes de ce type.

Pour résoudre ce problème, la solution la plus couramment utilisée à l'heure actuelle consiste à effectuer un tri des ressorts, afin de réduire la tolérance de fabrication. Cette technique permet effectivement de diminuer, de façon simple, les dispersions de fabrication, mais elle laisse subsister des variations relativement importantes et elle entraîne un surcoût du poste ressorts résultant des rebuts de fabrication.

Une autre solution actuellement utilisée consiste à effectuer un réglage du ressort du noyau mobile lorsque l'électrovanne a été assemblée. Dans ce but, la culasse c'est-à-dire le noyau fixe du sous-ensemble électro-aimant est percé et taraudé axialement de manière à pouvoir recevoir un poussoir fileté muni d'un joint torique pour en garantir l'étanchéité. Ce poussoir fileté est en contact, à l'une de ses extrémités, avec le ressort du noyau mobile du sous-ensemble électro-aimant. Pour régler l'électrovanne, c'est-à-dire l'effort du ressort du noyau mobile, il suffit d'admettre la pression maximale d'utilisation dans le canal inférieur de l'électrovanne, puis de visser le poussoir jusqu'à ce que le ressort du noyau mobile assure l'étanchéité du siège inférieur sous pression. Cette solution connue est précise car le ressort du noyau mobile ne délivre que l'effort nécessaire à assurer l'étanchéité sur le siège inférieur du clapet de l'électrovanne. L'inconvénient de cette solution réside dans ses coûts de fabrication et de mise en oeuvre : elle exige un taraudage de la culasse fixe de l'électrovanne, un usinage d'une pièce supplémentaire (poussoir fileté) et la mise en oeuvre d'un joint torique supplémentaire pour assurer l'étanchéité de l'ensemble.

Partant d'un état de la technique selon les figures 1 et 2, la présente invention s'est fixé pour objectif de résoudre le problème technique mentionné ci-dessus, c'est-à-dire :

- réduire les dispersions d'effort du ressort du noyau mobile du sous-ensemble électro-aimant et
- rattraper en outre les dispersions du ressort de rappel du clapet (ressort sous clapet) du sous-ensemble de commutation pneumatique,

ceci d'une manière simple, sans qu'il soit nécessaire de mettre en oeuvre des moyens d'étanchéité supplémentaires.

En conséquence, cette invention concerne un procédé de tarage du ressort du noyau mobile d'une électrovanne comportant un sous-ensemble électro-aimant associé à un sous-ensemble de commutation pneumatique à clapet, le mouvement du clapet dans le corps du sous-ensemble de commutation pneumatique étant provoqué d'une part par un ressort, situé dans le noyau mobile du sous-ensemble électro-aimant, par l'intermédiaire d'un poussoir et d'autre part, par un ressort situé sous le clapet et en appui autour du siège inférieur du sous-ensemble de commutation pneumatique, ce procédé étant caractérisé en ce que :

- l'on positionne un capteur d'efforts, soit à une distance prédéterminée de la face supérieure du noyau mobile, cette distance étant équivalente à la course réelle du noyau mobile, soit directement au contact de la face du noyau mobile lorsque l'on veut régler le ressort du noyau mobile sur son effort après course (noyau en contact sur la culasse) ;
- on monte le ressort du noyau mobile dans un alésage prévu à cet effet dans l'axe du noyau mobile, puis
- on positionne, derrière ledit ressort, une goupille élastique que l'on enfonce plus ou moins dans l'alésage du noyau, tout en mesurant l'effort généré par le ressort sur le capteur et
- on cesse d'enfoncer la goupille élastique dans le noyau mobile dès que l'effort voulu est mesuré par le capteur d'effort.

Selon un mode de mise en oeuvre du procédé selon l'invention, les paramètres dont on tient compte pour le réglage du ressort sont :

- d'une part, la hauteur posée du ressort, c'est-à-dire la hauteur à laquelle le ressort du noyau mobile doit fournir l'effort nécessaire pour assurer l'étanchéité sur le siège inférieur et,
- d'autre part, l'effort nécessaire pour assurer l'étanchéité sur le siège inférieur, ces deux paramètres pouvant être soit calculés, soit mesurés.

Selon un exemple de réalisation de l'invention, ladite goupille est percée de part en part. Elle peut être, de préférence, réalisée par l'enroulement en spirale d'un fil métallique, ou présenter la forme d'une pièce cylindrique ou d'une bille.

Le procédé selon l'invention peut être appliqué à une électrovanne du type normalement ouverte. Selon cette application particulière, on procède au réglage du ressort du noyau mobile du sous-ensemble électro-aimant en mesurant, à l'aide du capteur, l'effort qui est généré par le ressort sous clapet lorsqu'il est assemblé dans le sous-ensemble de commutation pneumatique et l'on reproduit cet effort dans le ressort du noyau mobile afin que les tolérances des deux ressorts soient compensées par le réglage du ressort du noyau mobile.

D'autres caractéristiques et avantages de la présente invention ressortiront de la description faite ci-après, en référence aux dessins annexés qui en illustrent des exemples de mise en oeuvre dépourvus de tout caractère limitatif. Sur les dessins :

- les figures 1 et 2 sont des vues en coupes axiales et verticales d'une électrovanne à laquelle s'applique le procédé objet de l'invention et auxquelles on s'est référé dans le préambule de la présente description ;

- la figure 3 représente des courbes qui illustrent la force du ressort du noyau mobile (dans certaines conditions indiquées sur le tableau annexé à cette figure) en fonction de l'entrefer du siège inférieur du clapet de l'électrovanne.

- la figure 4 est une vue schématique illustrant la mise en oeuvre du procédé objet de l'invention ;

- les figures 5a et 5b représentent un autre exemple de mise en oeuvre de l'invention et

- la figure 6 illustre les courbes d'effort du ressort sous clapet, en fonction de la course du clapet, pour une électrovanne normalement ouverte.

Ainsi qu'on l'a mentionné ci-dessus, le procédé objet de l'invention se propose de rattraper les dispersions de fabrication du ressort 17 du noyau mobile 18 du sous-ensemble électro-aimant de l'électrovanne grâce à un réglage simple n'exigeant pas de moyens d'étanchéité supplémentaires, ce réglage étant effectué au coeur du noyau mobile 18.

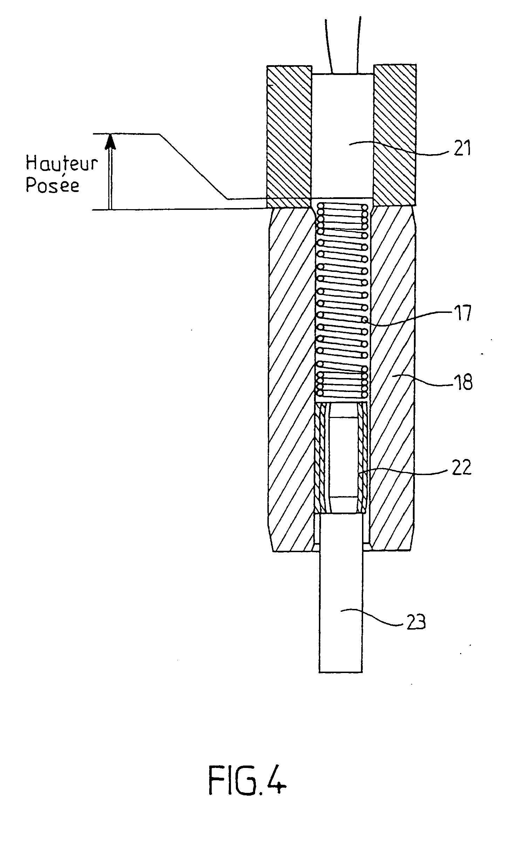

On se réfère à la figure 4. On voit que le noyau mobile 18 est traversé de part en part par un alésage qui est dimensionné de façon à recevoir le ressort 17. Dans cet exemple de réalisation selon l'invention, on positionne un capteur d'effort 21, à une distance prédéterminée, équivalente à la course réelle du noyau mobile 18 de la face supérieure du noyau 18. Lorsque le ressort doit être réglé sur son effort après course (noyau au contact de la culasse), le capteur 21 peut être positionné directement en contact sur la face du noyau Le ressort 17 étant positionné dans l'alésage du noyau 18, on introduit, derrière le ressort 17, une goupille élastique 22 prenant appui sur le ressort, ainsi qu'on le voit clairement sur la figure 4. Cette goupille élastique peut être réalisée par exemple par enroulement en spirale d'un fil métallique. Elle peut être réalisée sous d'autres formes, par exemple pièce cylindrique élastique, bille etc...

Selon la présente invention, le réglage du ressort 17 est obtenu par l'intermédiaire de la goupille 22 en enfonçant plus au moins cette dernière dans l'alésage du noyau 18. On peut utiliser à cet effet un poussoir tel que 23 et lorsque ce dernier repousse la goupille, on mesure l'effort généré par le ressort 17 sur le capteur 21. Dès que le capteur 21 a mesuré l'effort voulu, on cesse d'enfoncer la goupille 22 dans l'alésage du noyau.

Les paramètres dont on tient compte pour le réglage du ressort 17 dans les conditions précisées ci-dessus sont les suivants :

- la hauteur posée du ressort, c'est-à-dire la hauteur à laquelle le ressort 17 doit fournir l'effort nécessaire pour assurer l'étanchéité du siège 16 sur la voie inférieure de l'électrovanne : cette hauteur posée a été indiquée sur la figure 4 et
- l'effort nécessaire pour assurer l'étanchéité sur le siège inférieur 16.

Ces deux paramètres peuvent être soit calculés, soit mesurés et dès qu'ils sont connus, il suffit de mettre en oeuvre le procédé de réglage selon l'invention décrit ci-dessus.

Le procédé objet de l'invention permet de réduire la tolérance de l'effort du ressort 17 du noyau mobile à une valeur inférieure à 10%. La caractéristique consistant à utiliser une goupille élastique telle que 22 pour effectuer le réglage apporte notamment les avantages suivants :

- il s'agit d'une pièce facile à réaliser en grande série et donc peu coûteuse, dont la mise en oeuvre est bien plus économique par rapport au surcoût engendré par le tri des ressorts selon l'une des solutions de l'état antérieur de la technique mentionnées ci-dessus ;
- il est possible de réaliser l'alésage axial dans le noyau mobile 18 avec une tolérance de fabrication telle que l'on peut l'obtenir à l'aide d'un foret, alors qu'une tolérance beaucoup plus serrée est exigée pour des emmanchements durs de pièces usinées telles que le poussoir fileté mis en oeuvre dans l'autre solution selon la technique antérieure mentionnée ci-dessus ;
- la goupille 22 étant percée de part en part, on évite l'effet de « dashpot », c'est-à-dire la compression de l'air dans l'alésage du noyau mobile 18 recevant le ressort 17, lors de son arrivée au contact du noyau fixe 21 lors du fonctionnement de l'électrovanne.

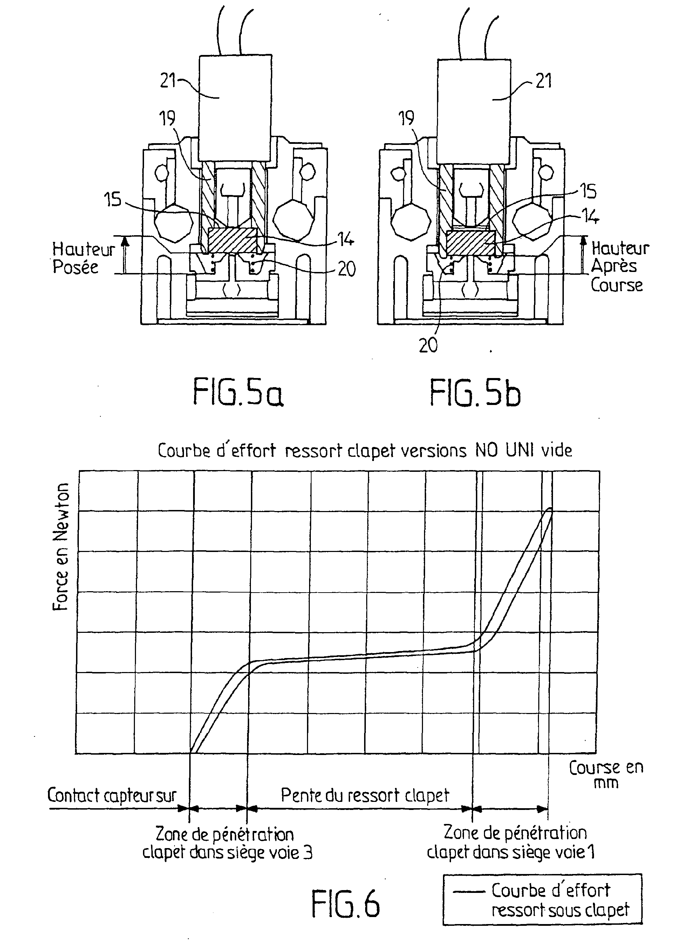

D'autres exemples de mise en oeuvre du procédé de l'invention sont illustrés par les figures 5a et 5b.

Ces exemples se réfèrent à une électrovanne du type 3/2, normalement fermée, mais pouvant également être fournie en version normalement ouverte, l'arrivée de pression et l'échappement étant alors inversés, alors que le canal de l'utilisation reste le même. L'invention peut également s'appliquer à des électrovannes dites universelles, dans lesquelles l'arrivée de pression peut se faire par n'importe quel canal.

Dans ces applications, il est également nécessaire d'obtenir un équilibre des forces entre les ressorts 17 et 20 : force du ressort 17 du noyau mobile 18 > force du ressort sous clapet 20.

Toutefois, il est nécessaire que le ressort sous clapet 20 assure l'étanchéité de la pression du siège 15 de la voie supérieure de l'électrovanne. On se trouve alors confronté au problème exposé ci-dessus et résolu par la présente invention, c'est-à-dire celui de la tolérance du ressort 17 du noyau mobile.

La solution est identique à celle décrite ci-dessus : on procède au réglage du ressort 17 du noyau mobile 18 en mesurant l'effort qui est généré par le ressort sous clapet 20 lorsqu'il est assemblé dans le sous-ensemble de commutation pneumatique et l'on reproduit cet effort dans le ressort 17 du noyau mobile afin que les tolérances des deux ressorts soient compensées par le réglage du ressort 17 (figures 5a, 5b et figure 6).

Il demeure bien entendu que la présente invention n'est pas limitée aux exemples de réalisation décrits et représentés ci-dessus, mais qu'elle en englobe les variantes qui tombent sous l'étendue de protection de la demande exclusivement définie par la portée des revendications ci-jointes.

**Revendications**

**1.** - Procédé de tarage du ressort (17) du noyau mobile (18) d'une électrovanne comportant un sous-ensemble électro-aimant (10) associé à un sous-ensemble de commutation pneumatique (12) à clapet (14), le mouvement du clapet (14) dans le corps du sous-ensemble de commutation pneumatique (12) étant provoqué d'une part par un ressort (17), situé dans le noyau mobile (18) du sous-ensemble électro-aimant (10), par l'intermédiaire d'un poussoir (19) et d'autre part, par un ressort (20) situé sous le clapet (14) et en appui autour du siège inférieur (16) du sous-ensemble de commutation pneumatique (12), ce procédé étant **caractérisé en ce que** :

- l'on positionne un capteur d'efforts (21), soit à une distance prédéterminée de la face supérieure du noyau mobile (18), cette distance étant équivalente à la course réelle dudit noyau mobile (18), soit directement au contact de la face du noyau mobile (18) lorsque l'on veut régler le ressort (17) du noyau mobile (18) sur son effort après course ;
- on monte le ressort (17) du noyau mobile (18) dans un alésage prévu à cet effet dans l'axe du noyau (18), puis
- on positionne, derrière ledit ressort (17) une goupille élastique (22) que l'on enfonce plus ou moins dans l'alésage du noyau mobile (18), tout en mesurant l'effort généré par le ressort (17) sur le capteur (21) et
- on cesse d'enfoncer la goupille élastique (22) dans le noyau mobile (18) dès que l'effort voulu est mesuré par le capteur d'effort (21).

**2.** - Procédé selon la revendication 1, **caractérisé en ce que** les paramètres dont on tient compte pour le réglage du ressort (17) du noyau mobile (18) sont, d'une part :

- la hauteur posée du ressort (17), c'est-à-dire la hauteur à laquelle le ressort (17) du noyau mobile (18) doit fournir l'effort nécessaire pour assurer l'étanchéité sur le siège inférieur (16) et,
- d'autre part, l'effort nécessaire pour assurer l'étanchéité sur le siège inférieur (16),

ces deux paramètres pouvant être soit calculés, soit mesurés.

**3.** - Procédé selon la revendication 1, **caractérisé en ce que** ladite goupille élastique (22) est percée de part en part.

**4.** - Procédé selon la revendication 3, **caractérisée en ce que** ladite goupille élastique (22) est réalisée par l'enroulement en spirale d'un fil métallique.

**5.** - Procédé selon l'une quelconque des revendications précédentes, appliqué à une électrovanne du type normalement ouverte, **caractérisé en ce que** l'on procède au réglage du ressort (17) du noyau mobile (18) du sous-ensemble électro-aimant (10) en mesurant, à l'aide du capteur (21), l'effort qui est généré par le ressort sous clapet (20) lorsqu'il est assemblé dans le sous-ensemble de commutation pneumatique (12) et l'on reproduit cet effort dans le ressort (17) du noyau mobile (18) afin que les tolérances des deux ressorts (17,20) soient compensées par le réglage du ressort (17) du noyau mobile (18).

**Claims**

**1.** Method of calibrating the spring (17) on the moving core (18) of a solenoid valve comprising an electromagnetic subassembly (10) associated with a pneumatic switching subassembly (12) with a valve (14), the movement of the valve (14) in the body of the pneumatic switching subassembly (12) being caused firstly by a spring (17) situated in the moving core (18) of the electromagnetic subassembly (10), by means of a pusher (19), and secondly by a spring (20) situated under the valve (14) and in abutment around the bottom seat (16) of the pneumatic switching subassembly (12), this method being **characterised in that**:

- a force sensor (21) is positioned either at a predetermined distance from the top face of the moving core (18), this distance being equivalent to the actual travel of the said moving core (18), or directly in contact with the face of the moving core (18) when it is wished to adjust the spring (17) of the moving core (18) on its force after travel;
- the spring (17) of the moving core (18) is mounted in a bore provided for this purpose in the axis of the core (18), and then

- there is positioned, behind the said spring (17), an elastic pin (22) that is pressed to a greater or lesser extent into the bore of the moving core (18), whilst measuring the force generated by the spring (17) on the sensor (21), and
- the elastic pin (22) is no longer pressed into the moving core (18) as soon as the required force is measured by the force sensor (21).

2. Method according to claim 1, **characterised in that** the parameters that are taken account of for adjusting the spring (17) of the moving core (18) are firstly:

- the installed height of the spring (17), that is to say the height at which the spring (17) of the moving core (18) must provide the force necessary for ensuring the seal on the bottom seat (16), and
- secondly, the force necessary for ensuring the seal on the bottom seat (16),

these two parameters being able to be either calculated or measured.

3. Method according to claim 1, **characterised in that** the said elastic pin (22) is pierced right through.

4. Method according to claim 3, **characterised in that** the said elastic pin (22) is produced by winding a metal wire in a spiral.

5. Method according to any one of the preceding claims, applied to a solenoid valve of the normally open type, **characterised in that** the spring (17) of the moving core (18) of the electromagnet subassembly (10) is adjusted by measuring, by means of the sensor (21), the force that is generated by the spring under the valve (20) when it is assembled in the pneumatic switching subassembly (12), and this force is reproduced in the spring (17) of the moving core (18) so that the tolerances of the two springs (17, 20) are compensated for by the adjustment of the spring (17) of the moving core (18).


**Patentansprüche**

1. Verfahren zum Kalibrieren der Feder (17) des bewegbaren Kerns (18) eines Magnetventils, das eine Elektromagnet-Untereinheit (10) aufweist, die mit einer pneumatischen Schalt-Untereinheit (12) mit einem Ventilelement (14) verbunden ist, wobei die Bewegung des Ventilelements (14) in dem Körper der pneumatischen Schalt-Untereinheit (12) einerseits über einen Stößel (19) durch eine Feder (17), die in dem bewegbaren Kern (18) der Elektromagnet-Untereinheit (10) angeordnet ist, und andererseits durch eine unter dem Ventilelement (14) und um den unteren Sitz (16) der pneumatischen Schalt-Untereinheit (12) herum anliegende Feder (20) bewirkt wird, wobei das Verfahren **dadurch gekennzeichnet ist, dass**

- ein Kraftaufnehmer (21) entweder in einem vorbestimmten Abstand von der Oberseite des bewegbaren Kerns (18), wobei dieser Abstand gleich dem tatsächlichen Weg des bewegbaren Kerns (18) ist, oder direkt in Kontakt mit der Fläche des bewegbaren Kerns (18) angeordnet wird, wenn beabsichtigt ist, die Feder (17) des bewegbaren Kerns (18) hinsichtlich ihrer Kraft nach dem Weg einzustellen;
- die Feder (17) des bewegbaren Kerns (18) in einer zu diesem Zweck vorgesehenen Bohrung in der Achse des Kerns (18) befestigt wird, worauf
- hinter der Feder (17) ein elastischer Stift (22) angeordnet wird, der mehr oder weniger in die Bohrung des bewegbaren Kerns (18) eingetrieben wird, wobei die von der Feder (17) auf den Aufnehmer (21) erzeugte Kraft gemessen wird, und
- das Eintreiben des elastischen Stifts (22) in den bewegbaren Kern (18) beendet wird, sobald die gewünschte Kraft von dem Kraftaufnehmer (21) gemessen wird.

2. Verfahren nach Anspruch 1, **dadurch gekennzeichnet, dass** es sich bei den bei der Einstellung der Feder (17) des bewegbaren Kerns (18) zu berücksichtigenden Parametern einerseits um

- die vorgegebene Höhe der Feder (17), d.h. die Höhe, bei der die Feder (17) des bewegbaren Kerns (18) die Kraft liefern soll, die zur Gewährleistung der Dichtigkeit am unteren Sitz (16) erforderlich ist, und
- andererseits um die zur Gewährleistung der Dichtigkeit am unteren Sitz (16) erforderliche Kraft handelt,

wobei die beiden Parameter entweder berechnet oder gemessen werden können.

3. Verfahren nach Anspruch 1, **dadurch gekennzeichnet, dass** der elastische Stift (22) vollständig durchbohrt ist.

4. Verfahren nach Anspruch 3, **dadurch gekennzeichnet, dass** der elastische Stift (22) durch schraubenlinienförmiges Aufwickeln eines Metalldrahts gebildet ist.

5. Verfahren nach einem der vorhergehenden Ansprüche, angewandt auf ein Magnetventil des normalerweise offenen Typs, **dadurch gekennzeichnet, dass** die Einstellung der Feder (17) des bewegbaren Kerns (18) der Elektromagnet-Unteranordnung (10) erfolgt, indem mittels des Kraftaufnehmers (21) die Kraft gemessen wird, welche von der Feder unter der Klappe (20) erzeugt wird, wenn sie in die pneumatische Schalt-Unteranordnung (12) eingebaut ist, und indem diese Kraft in der Feder (17) des bewegbaren Kerns (18) reproduziert wird, damit die Toleranzen der beiden Federn (17, 20) durch das Einstellen der Feder (17) des bewegbaren Kerns (18) kompensiert werden.

FIG.2

FIG.1

FIG.3

--- ressort -15%
--- ressort nominal
--- ressort +15%
—— Effort à générer pour étancher siège inférieur
—— Courbe d'effort S/E électroaimant

Force en Newton

Entrefer en mm

Hauteur
Posée

— 21

— 17

— 18

— 22

— 23

FIG.4

FIG.5a       FIG.5b

Courbe d'effort ressort clapet versions NO UNI vide

FIG.6

Courbe d'effort
ressort sous clapet